# EUROPEAN PATENT APPLICATION

(11) **EP 3 991 957 A1**
(43) Date of publication of application: **04.05.2022**
(21) Application number: 21206082.6
(22) Date of filing: 02.11.2021
(51) Int. Cl.: B29D 30/26

(54) **GRIPPING AND TRANSFER APPARATUS AND METHOD FOR GRIPPING AND TRANSFERRING A SEMI-FINISHED PRODUCT IN A TYRE FORMING PLANT**

(30) Priority: 02.11.2020 EP 20205283; 23.07.2021 IT 202100019721
(71) Applicant: Marangoni Meccanica S.P.A., 38068 Rovereto (IT)
(72) Inventor: LENTI, Massimo, 38068 ROVERETO (TN) (IT); BOSCOLO, Flavio, 38068 ROVERETO (TN) (IT)
(74) Representative: Giannini, Manuela

(57) **Abstract**

A transfer apparatus (10) for transferring a semi-finished product (3, 5) in a tyre forming machine (1), the transfer apparatus (10) having a lower support frame (13); a crown (14) of sliding blocks (15) adapted to surround the semi-finished product (3,5) to be transferred, and a support and handling device (18) to simultaneously move the sliding blocks (15) with respect to the support frame (13) and move each along a respective radial handling path from and to the semi-finished product (3, 5); the handling device (18) having a first motorised structure (19) and a second motorised structure (25) and both rotatable about an axis (16) of the crown (14) of sliding blocks (15) in opposite directions and, for each sliding block (15), at least one guide and slide transmission (30) interposed between the first and the second structures (19, 25) and acting on the relative sliding block (15).

## Description

### CROSS-REFERENCE TO RELATED APPLICATIONS

This patent application claims priority to European patent application no. 20205283.3 filed on November 2, 2020, and Italian patent application no. 102021000019721 filed on July 23, 2021.

### TECHNICAL FIELD OF THE INVENTION

The present invention relates to a gripping and transfer apparatus and method for gripping and transferring a semi-finished product in a tyre forming plant.

### STATE OF THE ART

From e.g., US 5,441,587 it is known to form a tyre by manufacturing a tyre carcass, carrying the tyre carcass onto a tyre forming drum and transferring onto the tyre carcass a semi-finished product consisting of a tyre belt-tread assembly previously formed in a different forming station.

The movement, which consists in transferring and arranging the belt-tread assembly around and coaxially to the outer circumference of the carcass, is carried out by using transfer apparatuses of the type comprising a support structure, a crown of sliding blocks or tiles coupled to the structure and arched with concavity facing the inside of the crown of sliding blocks for pressing, in use, on the outer peripheral surface of the belt-tread assembly, and a motorised device for moving the sliding blocks with respect to the support structure between two end-of-stroke positions, an extracted one, in which the crown of sliding blocks has a minimum diameter, and retracted one, in which the crown of sliding blocks has a maximum diameter.

The motorised devices used for moving the sliding blocks are various.

A first type comprises motorised devices that move the sliding blocks along respective circular paths. These motorised devices are poorly satisfactory due to the fact that during gripping or releasing operations relative sliding can be generated between the sliding blocks and the semi-finished product. Such sliding can compromise the integrity of the semi-finished product.

The problem of the relative sliding is overcome by a second type of motorised devices, the so-called radial movement devices, which are configured to move each sliding block along a relative radial direction.

Although appreciated and used, the radial movement devices have a drawback of being relatively bulky and the greater the radial stroke provided for the sliding blocks is the bulkier they are. High radial strokes are desired and appreciated so that the transfer apparatus allows transferring a wide range of semi-finished products having different outer diameter.

### OBJECT AND SUMMARY OF THE INVENTION

The object of the present invention is to provide an improved transfer apparatus, which allows the above-described problems to be simply and cost-effectively overcome.

In particular, the object of the present invention is to provide a transfer apparatus, which is efficient and reliable and, at the same time, constructively simple and with reasonable costs.

A further object of the present invention is to provide a transfer apparatus, in which the sliding blocks are movable along purely radial paths irrespective of their stroke.

According to the present invention, a gripping and transfer apparatus for gripping and transferring a semi-finished product in a tyre forming plant is provided, comprising a support frame; a crown of variable-diameter sliding blocks with a fixed axis; and a handling device for simultaneously moving the sliding blocks with respect to the support frame and each along a respective handling path; characterised in that the handling device comprises a first structure and a second structure arranged coaxially to said axis and rotatable with respect to said support frame in opposite directions about said axis; a first actuator operable to rotate the first structure about said axis; a second actuator operable to rotate the second structure about said axis; a drive and control unit configured to control and drive said first and second actuators to rotate the first structure in a first rotation direction and the second structure in a second rotation direction opposite to said first rotation direction; and, for each said sliding block, a respective transmission interposed between said first and said second structures and acting on the respective said sliding block.

Preferably, in the above-defined gripping and transfer apparatus, the sliding blocks are movable along a radial path intersecting the axis of the crown of sliding blocks.

Conveniently, the first and second structures are arranged at least partially one inside the other.

The present invention further relates to a method for gripping and transferring a semi-finished product for producing a tyre.

According to the present invention, a method for gripping and transferring a semi-finished product for producing a tyre by using a transfer apparatus is also provided, as claimed in claim 1, the method comprising the steps of carrying the crown of sliding blocks outside of the semi-finished product to be transferred so as to surround the semi-finished product and hold the semi-finished product in a fixed position with respect to the support frame by moving the sliding blocks simultaneously against the outer peripheral surface of the semi-finished product, characterised in that the movement of the sliding blocks is carried out by rotating the first and second structures in opposite directions about the axis of the crown of sliding blocks and by controlling motion profiles of the first and the second structures so as to move each sliding block towards the axis of the crown of sliding blocks along a predefined path.

Conveniently, in the above-defined method, the motion profiles of the first and the second structures are controlled so as to move each sliding block along a rectilinear radial path intersecting the axis of the crown of sliding blocks.

### BRIEF DESCRIPTION OF THE DRAWINGS

The invention will now be described with reference to the accompanying drawings, which illustrate a non-limiting example embodiment thereof, wherein:
Figure 1 is a partial perspective view of a tyre forming machine provided with a preferred embodiment of a gripping and transfer apparatus according to the present invention;
Figure 2 is a perspective view, on an enlarged scale, of the transfer apparatus of Figure 1;
Figure 3 is a front view, on an enlarged scale, of the transfer apparatus of Figure 1;
Figures 4 and 5 are analogous to Figure 3 and show the transfer apparatus in two different operating conditions; and
Figure 6 shows, on a greatly enlarged scale, a detail of the transfer apparatus of Figure 2.

### PREFERRED EMBODIMENT OF THE INVENTION

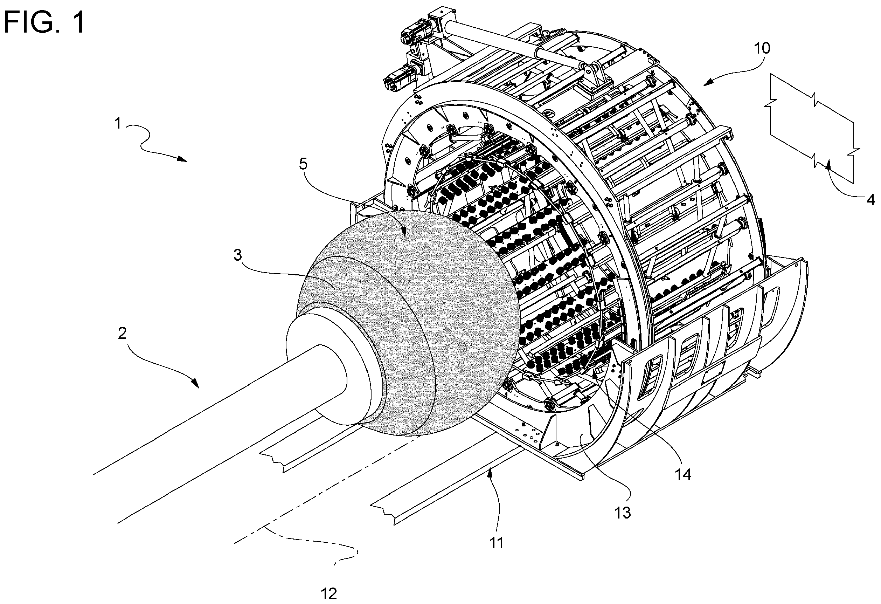

In Figure 1, reference numeral 1 indicates, as a whole, a machine for producing a tyre (not shown).

The machine 1 comprises a first forming unit 2, partially shown and known per se, for manufacturing a tyre carcass 3, a second forming unit 4, known per se as well, for manufacturing a semi-finished product, a tyre belt-tread assembly 5, and a gripping, transfer and coupling apparatus 10 to grip, transfer a couple the assembly 5 on the outer periphery of the tyre carcass 3 (Figure 1).

Analogously or alternatively, the apparatus 10 is used for gripping and transferring the semi-finished product composed of the tyre carcass 3 and of the tyre belt-tread assembly 5 towards another forming station.

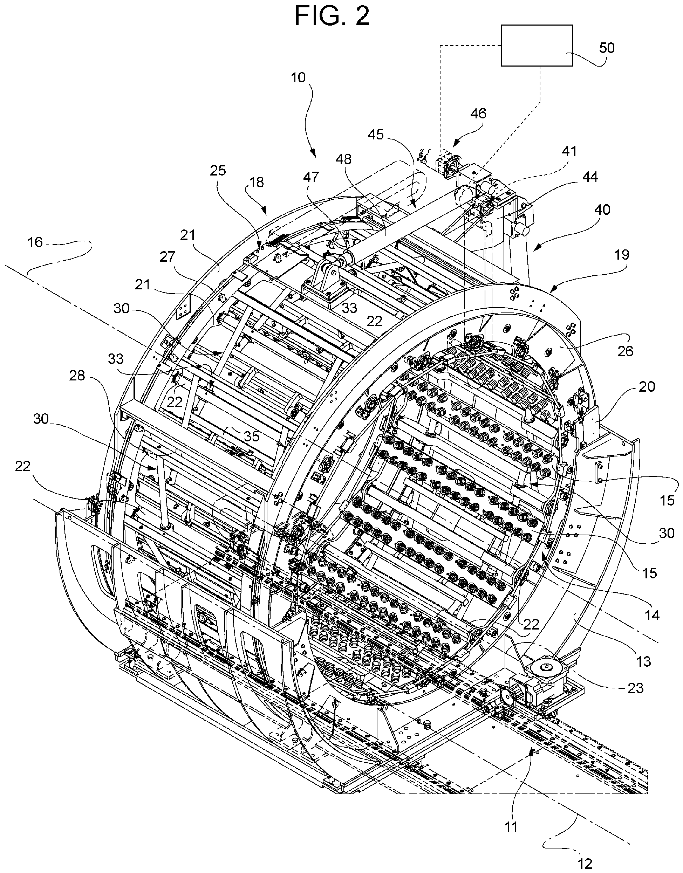

With reference to Figures 1 and 2, the gripping and transfer apparatus 10 is movable in opposite directions between the first and second units 2 and 4 along a fixed transfer track 11 extending in a direction 12.

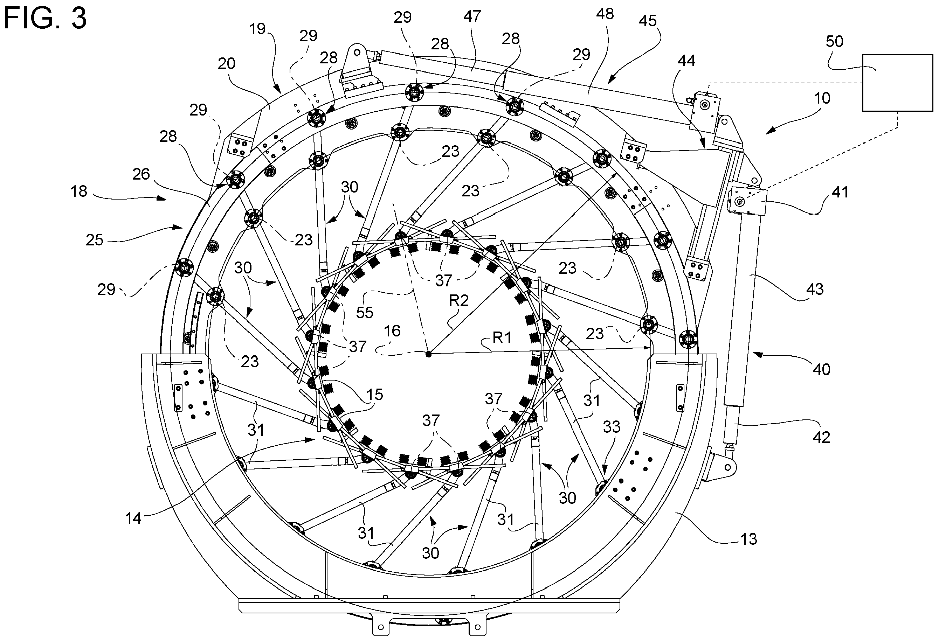

Also with reference to Figure 2 and to Figures 3 to 5, the apparatus 10 comprises a basin-shaped support frame 13 slidable along the track 11 (Figure 2) and a crown 14 of gripping and holding sliding blocks 15 having a fixed axis 16 parallel to the direction 12.

The apparatus 10 further comprises a motorised tubular device 18 for supporting and handling the sliding blocks 15 of the crown 14.

The tubular device 18 extends upwards from the support frame 13 and is coupled to the support frame 13 in an axially fixed position and so as to rotate about the axis 16.

The tubular device 18 houses the crown 14 of sliding blocks 15 and comprises an outer tubular structure 19 coaxial to the axis 16 and coupled to the support frame 13 in an axially fixed position and so as to rotate about the axis 16.

The outer tubular structure 19 comprises, in turn, two annular bodies 20 and 21 coaxial to the axis 16 and mutually spaced along the axis 16 and a plurality of cross members 22. Each cross member 22 has opposite end portions hinged to the annular bodies 20, 21 so as to rotate in opposite directions about a respective axis 23 parallel to the axis 16 (Figures 3-5).

The tubular device 18 further comprises an inner tubular structure 25, which extends between the annular bodies 20, 21 coaxially to the axis 16 and is coupled, in a manner known per se, to the outer tubular structure 19 in an axially fixed position and so as to rotate about the axis 16.

Analogously to the outer tubular structure 19, the inner tubular structure 25 comprises, in turn, two annular bodies 26 and 27 arranged coaxially to the axis 16 and each arranged alongside a corresponding annular body 20, 21 and a plurality of cross members 28 interleaved with the cross members 22.

Each cross member 28 has its opposite end portions hinged to the annular bodies 26, 27 so as to rotate in opposite directions about respective axes 29 parallel to the axis 16.

With reference to Figures 3 to 5, the axes 23 intersect a circumference having a radius R1, whereas the axes 29 intersect a circumference having a radius R2 greater than the radius R1.

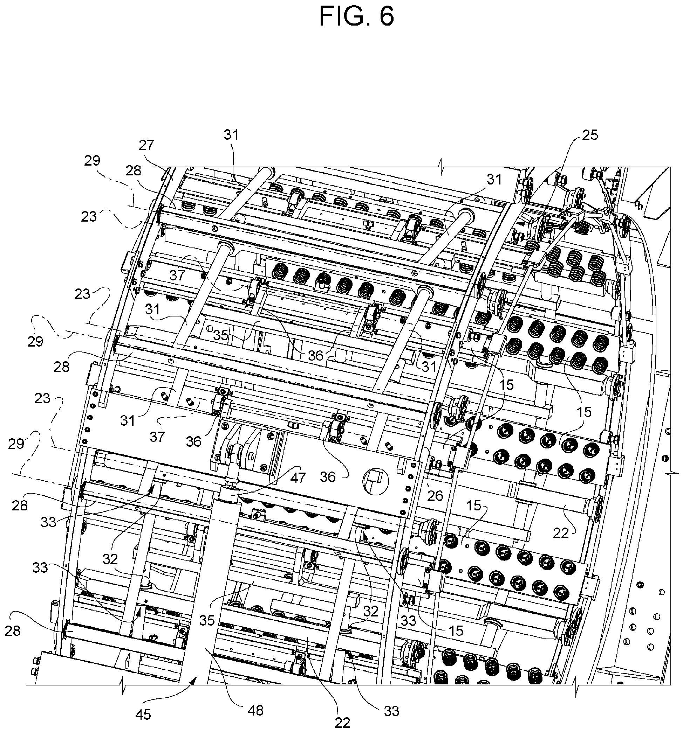

With reference to Figures 2, 3, 4 and 5 and, in particular, to Figure 6, each sliding block 15 is coupled to both tubular structures 19, 25 by means of a respective transmission 30, which constitutes part of the tubular device 18.

Each transmission 30 comprises two cylindrical rods 31 orthogonal to the axis 16, each of which extends through a respective cross member 22 and inside a respective guide bushing 32 fixed to the cross member 22 so as to define with the cross member 22 a respective guide and slide assembly 33 which is part of the transmission 30.

Each rod 31 has an end portion firmly connected to the respective cross member 28 and an opposite end portion firmly connected to a cross member 35.

The cross members 22, 28 and 35 constitute part of the respective transmission 30. Each cross member 35 is, in turn, connected to the respective sliding block 25 by means of two respective brackets 36 integral to the cross member 35, cantilevered to the cross member 35 and hinged to the respective sliding block 15 so as to rotate about a fulcrum axis 37 parallel to the axis 16.

Also with reference to Figure 2 and, in particular, to Figures 3 to 5, the tubular device 18 further comprises a first linear actuator 40, which is conveniently operated by an electric gear motor 41 and has an exit stem 42 hinged to the support frame 13 and a sleeve 43 hinged to a bracket 44 firmly connected to the outer tubular structure 19 and radially protruding outside of the outer tubular structure 19.

The tubular device 18 further comprises a further linear actuator 45, which is conveniently operated by an electric gear motor 46 and has an exit stem 47 hinged to the inner tubular structure 25 and a sleeve 48 hinged to the bracket 44.

Also with reference to Figure 2 and 3 to 5, the actuators 40 and 45 are driven and controlled by a drive and control unit referenced by 50. The drive and control unit 50 also constitutes part of the apparatus 10 and is configured to drive the actuators 40 and 45 independently of one another, so as to move each sliding block 15 along a desired feed path from and to the axis 6. In particular, the actuators 40 and 45 are driven so as to rotate the outer tubular structure 19 and the inner tubular structure 25 in opposite directions about the axis 16 and with respective motion profiles, whose combination causes the movement of each of the sliding blocks 15 in opposite directions from and to the axis 16 along the predefined path.

Conveniently, the motion profiles with which the outer structure 19 and inner structure 25 are rotated are chosen so that each sliding block 15 is moved along a respective rectilinear and radial path referenced by 55 in Figures 3 to 5.

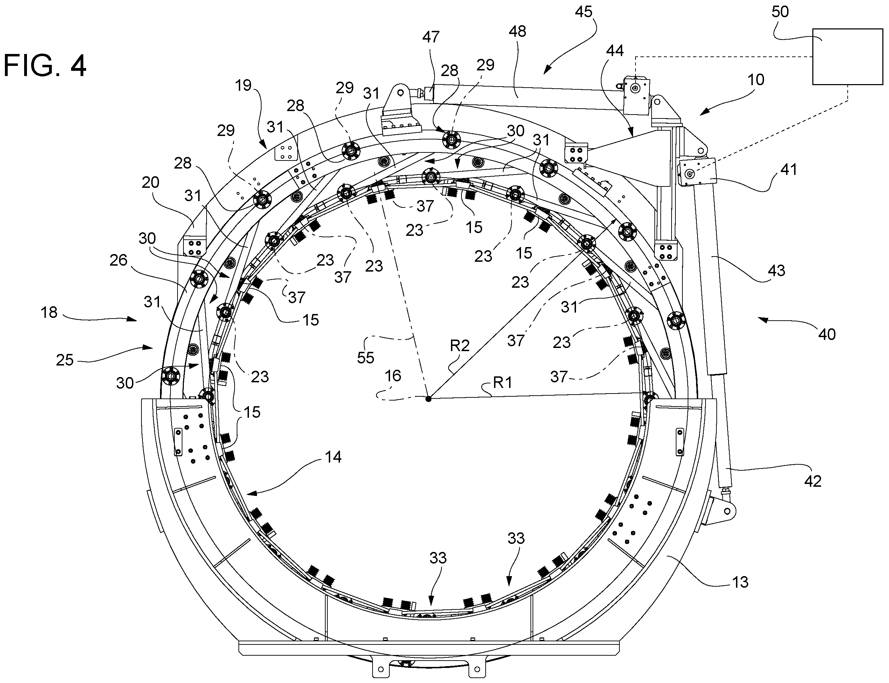

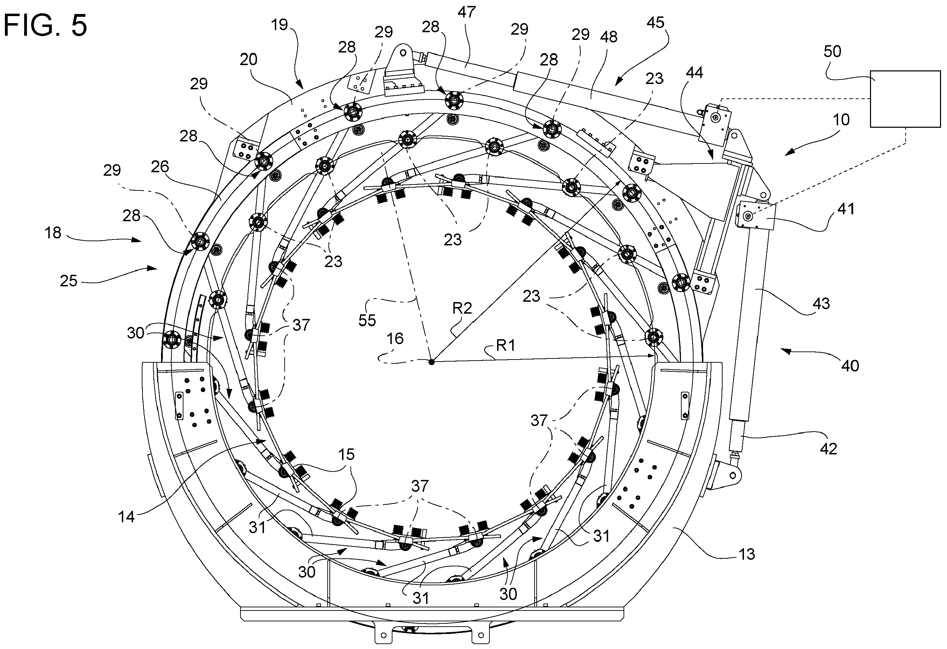

Whatever the path 55, the tubular device 18 allows the sliding blocks 15 to be moved between two end-of-stroke positions, an extracted one, in which the crown 14 of sliding blocks 15 has a minimum diameter, and retracted one, in which the crown 14 of sliding blocks 15 has a maximum diameter, shown in Figure 4, and through a plurality of intermediate positions corresponding to intermediate diameters of the crown 14 of sliding blocks 15, one of which is shown in Figure 5.

Based on the foregoing, it may be appreciated that whatever the path followed by the sliding blocks 15 is and whatever the position of the sliding blocks 15 is along the same path, the transfer apparatus 10 has an outer bulk not only moderate but invariant. This essentially derives from the fact of providing for two tubular structures rotating in opposite directions and guide and slide transmissions interposed between the two structures and housed in the space comprised between the two structures when the crown 14 of sliding blocks 15 has its maximum diameter.

Then, the provision of counter-rotating coaxial tubular structures and of simple guide and slide transmissions interposed between the tubular structures results in the transfer apparatus 10 being constructively simple, highly efficient and reliable and with relatively reasonable costs.

The possibility of controlling the path followed by the sliding blocks allows any relative sliding between the sliding blocks and the semi-finished product to be completely eliminated.

Based on the foregoing, it is apparent that modifications and variants can be made to the described transfer apparatus 10.

In particular, the tubular structures 19, 25 may be different from those described, as they can be modified by a person skilled in the art, for example, depending on the specific application.

Unlike what has been illustrated, the tubular structures 19 and 25 may not be completely inserted one inside the other with the aim to minimize the bulks in axial direction, but they may be only partially inserted one inside the other or anyway be manufactured and coupled so as to allow a movement of the one with respect to the other.

Likewise, the way in which the tubular structures couple to one another or to the frame 13 can be modified or varied.

The transmissions 30 themselves can be made in a different way from the one described and comprise, for example, a single rod 31 or a plurality of rods 31 or be replaced by conceptually different transmissions.

Finally, the linear actuators 40 and 45 or only one of them may be arranged in positions different from those illustrated by way of example or, also, one or both may be replaced by angular actuators or by toothed mechanical transmissions.

## Claims

1. A gripping and transfer apparatus (10) to grip and transfer a semi-finished product (3, 5) in a tyre forming plant; the apparatus (10) comprising a support frame (13); a crown (14) of variable-diameter sliding blocks (15) with a fixed axis (16); and a handling device (18) to simultaneously move the sliding blocks (15) with respect to the support frame (13) and each along a respective handling path; **characterised in that** said handling device (18) comprises a first structure (19) and a second structure (25) surrounding said axis (16) and rotatable with respect to said support frame (13) in opposite directions about said axis (16); a first actuator (40) for rotating the first structure (19) about said axis (16); a second actuator (45) for rotating the second structure (25) about said axis (16); a drive and control unit (50) for controlling and driving said first and second actuators (40, 45) to rotate the first structure (19) in a first rotation direction and the second structure (25) in a second rotation direction opposite to said first rotation direction; and, for each said sliding block (15), a respective transmission (30) interposed between said first and said second structures (19, 25) and acting on the respective said sliding block (15).

2. The apparatus (10) of claim **1,** wherein said path is a radial path intersecting said axis (16).

3. The apparatus (10) of claim **1** or **2,** wherein said first and second structures (19, 25) are arranged at least partially one inside the other.

4. The apparatus (10) of any one of the preceding claims, wherein said first actuator (40) is interposed between said first structure (19) and said support frame (13), and said second actuator (45) is interposed between said first structure (19) and said second structure (25) to rotate said second structure (25) with respect to said first structure (19) .

5. The apparatus (10) of claim **3,** wherein said first and second actuators (40, 45) are linear actuators and have respective ends hinged to a common attachment bracket (44) fixed to said first structure (19) and respective opposite ends hinged to said support frame (13) and to said second structure (25), respectively.

6. The apparatus (10) of any one of the preceding claims, wherein each said transmission (30) comprises at least one respective guide and slide assembly (33), in turn, comprising a guide (22, 32) carried by said first structure (19) and a slide (31) sliding orthogonally to said axis (16) along the respective said guide (22, 32) and coupled to said second structure (25) on one side and to the relative said sliding block (15) on the other side.

7. The apparatus (10) of claim 6, wherein each said guide (22, 32) is hinged to said first structure (19) to rotate in opposite directions about a first hinge axis (23) parallel to said axis (16).

8. The apparatus (10) of claim **6** or **7,** wherein said slide (31) is hinged to said second structure (25) to rotate about a second hinge axis (29) parallel to said axis (16).

9. The apparatus (10) of any one of the preceding claims **6** to **8,** wherein each said sliding block (15) is hinged to the respective slide (31) to rotate about a third hinge axis (37) parallel to said axis (16).

10. The apparatus (10) of any one of the preceding claims **6** to **9,** wherein said slide (31) comprises at least one rod (31) extending orthogonally to said axis (16) and passing through a respective guide bushing (32) fitted in said first structure (19).

11. The apparatus (10) of any one of the preceding claims **6** to **10,** wherein said first and second structures (19, 25) are tubular structures and comprise a pair of first annular bodies (20, 21) and, respectively, a pair of second annular bodies (26, 27) coaxial to said axis (16) and spaced from one another along said axis (16); said transmissions (30) being interposed between said first and second annular bodies 20, 21, 26, 27).

12. The apparatus (10) of claim **11,** wherein said first and second tubular structures (19, 25) comprise, respectively and for each said sliding block (15), a first cross member (22) extending between said first annular bodies (20, 21) parallel to said axis (16), and a second cross member (28) extending between said second annular bodies (26, 27) parallel to said first cross member (22); said first cross member (22) carrying a respective said guide (32) and said second cross member (28) defining part of the respective said slide (31).

13. The apparatus (10) of claim **12,** wherein each said transmission (30) comprises two of said guide and slide assemblies (33) axially spaced from one another along the respective said second cross member (28).

14. A method for gripping and transferring a semi-finished product (3, 5) for producing a tyre by using the transfer apparatus of claim **1,** the method comprising the steps of carrying the crown (14) of sliding blocks (15) outside of the semi-finished product (3, 5) to be transferred so as to surround the semi-finished product (3, 5) and hold the semi-finished product (3, 5) in a fixed position with respect to the support frame (13) by moving the sliding blocks (15) simultaneously against the outer peripheral surface of the semi-finished product (3, 5); **characterised in that** the movement of the sliding blocks (15) is carried out by rotating the first and second structures (19, 25) in opposite directions about the axis (16) of the crown (14) of sliding blocks (15) and by controlling the motion profiles of the first and the second structures (19, 25) so as to move each sliding block (15) towards the axis (16) of the crown (14) of sliding blocks (15) along a predefined path.

15. The method of claim **14,** wherein the motion profiles of the first and the second structures (19, 25) are controlled so as to move each sliding block (15) along a rectilinear radial path and intersecting the axis (16) of the crown (14) of sliding blocks (15).

16. The method of claim **14** or **15,** wherein said first and second structures (19, 25) are rotated simultaneously about the axis (16) of the crown (14) of sliding blocks (15).
